# EUROPEAN PATENT SPECIFICATION

(11) **EP 0 590 440 B1**
(45) Date of publication and mention of the grant of the patent: **14.02.1996**
(21) Application number: 93114993.4
(22) Date of filing: 17.09.1993
(51) Int. Cl.: B60S 1/04

(54) **Motor vehicle window wiper**
Scheibenwischer für Kraftfahrzeuge
Essuie-glace pour véhicule automobile

(30) Priority: 30.09.1992 IT TO920796
(43) Date of publication of application: 06.04.1994
(73) Proprietor: FIAT AUTO S.p.A., I-10135 Torino (IT)
(72) Inventor: Fumia, Enrico, I-10024 Moncalieri (Torino) (IT)
(74) Representative: Lotti, Giorgio

(56) References cited:
- EP-A- 0 075 787
- FR-A- 2 652 325
- GB-A- 2 077 094
- US-A- 4 756 568

## Description

This invention relates to a motor vehicle window wiper and gasket assembly, applicable either to the rear window or to the windscreen.

One of the current tendencies in automobile design is to eliminate as far as possible all parts which project beyond the vehicle outline in order to achieve surfaces with the best coefficient of aerodynamic penetration. It is hence sought to integrate the headlights, external rearview mirrors and bumpers harmoniously with the vehicle body. Automobiles hence become more compact, with good aesthetic results in addition to aerodynamic improvements leading to improvements in performance and fuel consumption.

An aesthetically and aerodynamically advantageous design has also been sought for the window wipers as in EP-A-0 075 787. In this respect, the object of the invention is to provide a window wiper which under rest conditions is integrated into the outline of the automobile.

This and further objects and advantages which will be more apparent hereinafter are attained according to the invention by a motor vehicle window wiper and gasket assembly, consisting of an elongate body having a substantially flat upper or outer surface; the window wiper being received, when in its closed or non-operative position, within a corresponding seat or recess (Wiper of the type disclosed in EP-A-0 075 787), characterised in that the seat or recess is provided in the upper or outer surface of a fixed gasket interposed between an edge of the vehicle body and the window to be wiped; said surface of the window wiper being arranged, when in said closed configuration, flush with said surface of the gasket.

Further developments in line with claim 1 are referred to in the dependent claims 2 to 5.

The structural and operational characteristics of a preferred but non-limiting embodiment of the window wiper according to the invention are described hereinafter with reference to the accompanying drawings, in which:
Figure 1 is a perspective view of the rear of an automobile provided with a window wiper and gasket assembly according to the present invention, shown in its rest position;
Figure 2 is a perspective view analogous to that of Figure 1, but showing the window wiper in different operating positions;
Figure 3 is a cross-section through the window wiper and gasket assembly, shown in its rest or closed position;
Figure 4 is a cross-section taken through the vehicle body immediately adjacent to the window wiper on a plane parallel to that of Figure 3; and
Figure 5 is a cross-section through the rear window wiper taken at its hinge on a plane parallel to that of Figures 3 and 4.

It will be noted that in the illustrated embodiment the window wiper according to the invention is used to wipe the rear window of an automobile. It can however be applied without substantial modification to the front of the automobile to clean the windscreen.

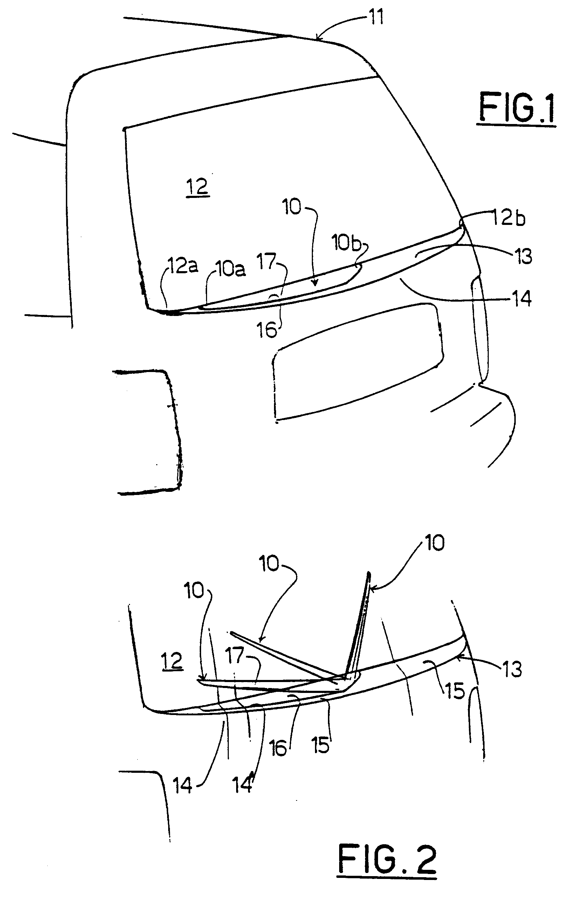

Referring initially to Figure 1, the reference numeral 10 indicates overall a window wiper according to the invention mounted on the rear of an automobile 11 to wipe the rear window 12.

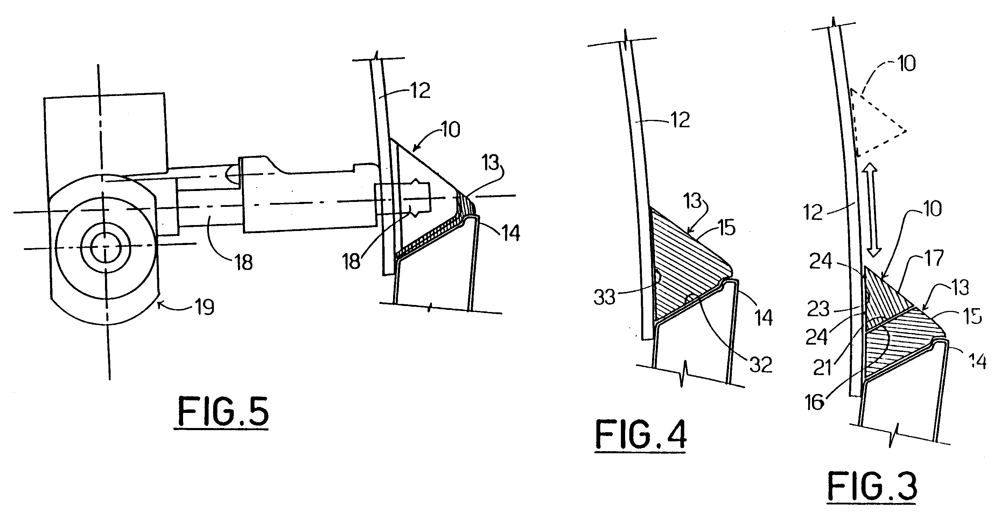

To house the rear window wiper according to the invention, the edge 14' of that part of the vehicle body 14 below the window 12 must be spaced from it in such a manner as to define a seat 29 extending transversely from one side of the window to the other, and in which a fixed gasket 13 is located. This fixed gasket (Figure 3), which is fixed lowerly to the vehicle body 14 and presses against the window 12, upperly defines a stepped surface 15 which connects the window 12 to the edge 14' of the vehicle body 14. In the gasket 13 there is provided a transverse seat or recess 16 of shape congruent to the window wiper 10, and arranged to house this latter when in its closed or non-operative position (Figure 1).

With reference to Figure 3, the window wiper according to the invention comprises an elongate body 10 of substantially triangular cross-section and constructed preferably of plastics material. It comprises an upper or outer surface 17 which when in the closed position (Figure 1) is flush with the upper surface 15 of the fixed gasket 13, a rear surface 21 arranged to abut against the gasket 13 when in its closed or lower end-of-swing position, a front surface 23 facing the window 12 to be wiped and carrying for this purpose one or more wiper blades 24 which are constantly urged into contact with the surface of the window to be wiped.

Figure 4 shows a cross-section through the gasket 13 in a part adjacent to that comprising the rear window wiper 10. In such parts, which extend from the ends 10a and 10b of the window wiper to the ends 12a and 12b of the window (Figure 1), the cross-section through the gasket assumes a substantially triangular shape, and comprises in addition to said outer surface 15 a surface 32 to be fixed to the vehicle body 14 and a surface 33 sealing against the window 12. In contrast, in Figure 3 the cross-section through the gasket 13 where the window wiper seat 16 is present assumes a substantially quadrilateral shape.

With reference to Figure 5, the window wiper according to the invention is rotatably rigid with a rocker shaft 18 driven with reciprocating rotary motion by a suitable motor 19 of traditional type. At the shaft 18 the gasket 13 is suitably thinned to provide the space necessary for fixing the window wiper to the end 20 of the shaft 18.

As will be apparent, when in its closed position (Figure 1) the window wiper 10 does not project beyond the outline of the automobile and neither is it immediately distinguishable from the fixed gasket 13, of which it can conveniently be of the same colour. Particularly when applied to the automobile windscreen, the window wiper and gasket assembly of the invention satisfies the aerodynamic requirements stated in the introduction to the present description.

The invention is not limited to that described and illustrated, which is to be considered as purely illustrative of the best method of implementing the invention, which is susceptible to modification to the shape. dimensions and arrangement of the parts, and in terms of constructional and operational details. In particular, the shape of the cross-sections through the window wiper 10 and fixed gasket 13 (Figure 3) and the inclination of the outer surfaces 17 and 15 can vary case for case in accordance with the longitudinal profile of the automobile. The invention embraces all modifications which lie within its scope, as defined by the following claims.

## Claims

1. A motor vehicle window wiper and gasket assembly, consisting of an elongate body (10) having a substantially flat upper or outer surface (17); the window wiper being received, when in its closed or non-operative position, within a corresponding seat or recess (16), characterised in that the seat or recess is provided in the upper or outer surface (15) of a fixed gasket (13) interposed between an edge (14') of the vehicle body (14) and the window (12) to be wiped; said surface (17) of the window wiper being arranged, when in said closed configuration, flush with said surface (15) of the gasket (13).

2. A window wiper and gasket assembly as claimed in claim 1, characterised in that the edge (14') of the vehicle body (14) and the window (12) are spaced apart to define a transverse seat (29) which extends transversely adjacent to the window (12) and fixedly receives the gasket (13).

3. A window wiper and gasket assembly as claimed in claim 1, characterised by consisting of an elongate body (10) of substantially triangular cross-section, comprising said first upper or outer surface (17), a second surface (21) arranged to abut against the gasket (13) when in its closed or lower end-of-swing position, and a third surface (23) facing the window (12) to be wiped and carrying one or more wiper blades (24).

4. A window wiper and gasket assembly as claimed in the preceding claims, characterised in that said surface (15) of the gasket (13) forms a connection step between the window (12) and the vehicle body (14).

5. A window wiper and gasket assembly as claimed in the preceding claims, characterised in that the gasket (13) is of substantially triangular cross-section.

## Patentansprüche

1. KFZ-Scheibenwischer und Dichtungsanordnung, bestehend aus einem langgestreckten Körper (10) mit einer im wesentlichen flachen oberen, bzw. äußeren Fläche (17), wobei der Scheibenwischer, wenn er in seiner geschlossenen Ruhestellung ist, in einem entsprechenden Sitz bzw. einer entsprechenden Ausnehmung (16) aufgenommen ist,
**dadurch gekennzeichnet, daß**
der Sitz bzw. die Ausnehmung in der oberen bzw. äußeren Fläche (15) einer festen Dichtung (13) vorgesehen ist, die zwischen einer Kante (14') des Fahrzeugkörpers (14) und der zu wischenden Scheibe (10) angeordnet ist, wobei die Fläche (17) des Scheibenwischers, wenn er in der geschlossenen Stellung ist, mit der Fläche (15) der Dichtung (13) bündig ist.

2. Scheibenwischer und Dichtungsanordnung nach Anspruch 1,
**dadurch gekennzeichnet, daß**
die Kante (14') des Fahrzeugkörpers (14) und die Scheibe (12) so beabstandet sind, daß sie einen quer verlaufenden Sitz (29) bilden, der sich in Querrichtung nahe der Scheibe (12) erstreckt und die Dichtung (13) fest aufnimmt.

3. Scheibenwischer und Dichtungsanordnung nach Anspruch 1,
**gekennzeichnet durch**
einen langgestreckten Körper (10) mit im wesentlichen dreieckigem Querschnitt und mit einer ersten oberen bzw. äußeren Fläche (17), einer zweiten Fläche (21), die an der Dichtung (13) anliegt, wenn er sich in seiner geschlossenen bzw. unteren Hubendestellung befindet, und mit einer dritten Fläche (23), die der zu wischenden Scheibe (12) zugewandt ist, und die ein oder mehrere Wischerblätter trägt.

4. Scheibenwischer und Dichtungsanordnung nach einem der vorhergehenden Ansprüche,
**dadurch gekennzeichnet, daß**
die Fläche (15) der Dichtung (13) eine Verbindungsstufe zwischen der Scheibe (12) und dem Fahrzeugkörper bildet.

5. Scheibenwischer und Dichtungsanordnung nach einem der vorhergehenden Ansprüche,
**dadurch gekennzeichnet, daß**
die Dichtung (13) im wesentlichen dreieckigen Querschnitt hat.

## Revendications

1. Assemblage de joint d'étanchéité et d'essuie-glace de véhicule motorisé constitué d'un corps (10) oblong ayant une surface (17) supérieure ou extérieure sensiblement plane, l'essuie-glace étant logé, dans sa position fermée ou de non fonctionnement, dans un siège correspondant ou évidement (16), caractérisé en ce que le siège ou évidement est prévu dans la surface (15) extérieure ou supérieure d'un joint d'étanchéité (13) interposé entre un bord (14') du corps (14) du véhicule et la vitre (12) à essuyer ; la surface (17) de l'essuie-glace étant, lorsqu'il est dans sa configuration fermée, à affleurement avec la surface (15) du joint d'étanchéité (13).

2. Assemblage de joint d'étanchéité et d'essuie-glace de véhicule motorisé suivant la revendication 1, caractérisé en ce que le bord (14') du corps (14) du véhicule et la vitre (12) sont à distance l'un de l'autre en définissant un siège (29) transversal qui s'étend transversalement en étant adjacent à la vitre (12) et reçoit de manière fixe le joint d'étanchéité (13).

3. Assemblage de joint d'étanchéité et d'essuie-glace de véhicule motorisé suivant la revendication 1, caractérisé en ce qu'il consiste en un corps (10) oblong de section transversale sensiblement triangulaire, comprenant la première surface (17) supérieure ou extérieure, une deuxième surface (21) disposée de manière à venir en butée contre le joint d'étanchéité (13) lorsqu'il est dans la position fermée ou position basse de fin de balancier, et une troisième surface (23) faisant face à la vitre (12) à essuyer et portant une ou plusieurs lames (24) d'essuyage.

4. Assemblage de joint d'étanchéité et d'essuie-glace de véhicule motorisé suivant l'une quelconque des revendications précédentes, caractérisé en ce que la surface (15) du joint d'étanchéité (13) forme une marche de connexion entre la vitre (12) et le corps (14) du véhicule.

5. Assemblage de joint d'étanchéité et d'essuie-glace de véhicule motorisé suivant l'une quelconque des revendications précédentes, caractérisé en ce que le joint d'étanchéité (13) a une section transversale sensiblement triangulaire.
